# EUROPÄISCHE PATENTSCHRIFT

(11) **EP 0 782 488 B1**
(45) Veröffentlichungstag und Bekanntmachung des Hinweises auf die Patenterteilung: **21.04.1999**
(21) Anmeldenummer: 95920752.3
(22) Anmeldetag: 03.06.1995
(51) Int. Cl.: B23K 20/10, H01R 43/02

(54) **ULTRASCHALL-SCHWEISSVERFAHREN UND ULTRASCHALL-SCHWEISSVORRICHTUNG**
ULTRASONIC WELDING PROCESS AND ULTRASONIC WELDING DEVICE
PROCEDE ET DISPOSITIF DE SOUDAGE PAR ULTRASON

(30) Priorität: 24.09.1994 DE 4434132
(43) Veröffentlichungstag der Anmeldung: 09.07.1997
(73) Patentinhaber: ROBERT BOSCH GMBH, 70442 Stuttgart (DE)
(72) Erfinder: SCHWERDTLE, Martin, D-71701 Schwieberdingen (DE); ALTPETER, Arno, D-71067 Sindelfingen (DE)
(86) Internationale Anmeldenummer: DE9500726
(87) Internationale Veröffentlichungsnummer: WO9609134

(56) Entgegenhaltungen:
- EP-A- 0 027 826
- EP-A- 0 133 883
- DE-C- 4 128 858

## Beschreibung

Ultraschall-Schweißverfahren und Ultraschall-Schweiß-vorrichtung für damit hergestellte Schweißverbindungen.

Die Erfindung betrifft ein Ultraschall-Schweißverfahren und eine Ultraschall-Schweißvorrichtung nach dem Oberbegriff des Anspruchs 1 beziehungsweise 3 für damit hergestellte Schweißverbindungen.

### Stand der Technik

Es ist bekannt, bei rotierenden elektrischen Maschinen, beispielsweise bei Starter-Antriebsmotoren für Kraftfahrzeuge, Kommutatoren als Verbindungselemente zwischen rotierenden Spulen (Ankerwicklung) und deren ruhenden Zuleitungen einzusetzen. Die Kommutatoren weisen hierzu gegeneinander isolierte Lamellen auf, die Kontaktbereiche besitzen, an denen jeweils der Anfang einer Spule und das Ende einer anderen Spule der Ankerwicklung entsprechend der gewählten Ankerverschaltung angeschlossen sind. Es sind somit an jedem Kontaktbereich jeweils zwei Drahtenden der Ankerwicklung zu befestigen. Hierzu ist bekannt, die Drahtenden übereinanderliegend auf die Kontaktbereiche mittels eines Widerstands-Diffusionsschweißverfahrens zu befestigen. Hierzu wird eine Schweißelektrode einer Schweißvorrichtung mit dem Kommutator verbunden und die andere Schweißelektrode von außen an das außenliegende Drahtende herangeführt. Durch einen Stromfluß erfolgt dann ein Verschweißen der Drahtenden untereinander sowie des unteren Drahtendes mit dem Kontaktbereich. Hierbei ist nachteilig, daß die Drahtenden einer besonderen Vorbereitung bedürfen, damit diese für das Widerstands-Diffusionsschweißen einsetzbar sind. In der Regel werden die Drahtenden hierzu verzinnt. Weiterhin ist nachteilig, daß jede Lamelle einzeln kontaktiert werden muß, so daß das Befestigen aller Drahtenden an dem Kommutator relativ zeitaufwendig ist.

Aus der EP-A1-0 027 826 ist es bekannt, zwei übereinanderliegende Leiter des Rotors einer elektrischen Maschine mittels Ultraschall auf den ihnen zugeordneten Kontaktbereich eines Kommutators anzuschweißen. Dabei hat die mit Ultraschall schwingende Sonotrode auf ihrer Stirnseite eine Ausnehmung zur Aufnahme und Führung der beiden Anschlußdrähte. Die Sonotrode wird dabei gegen die Kontaktfläche des Kommutators bewegt, so daß die Anschlußdrähte zwischen ihr und dem Kommutator druckbelastet eingeklemmt werden. Die Sonotrode schwingt dann unter Beibehaltung des Druckes, um die erforderliche Reibungswärme zwischen der Kontaktfläche des Kommutators und dem unteren Leiter einerseits sowie zwischen den beiden übereinander liegenden Leitern zu erzeugen. Da die Ultraschallschwingung von der Sonotrode zunächst auf den oberen Leiter und von diesem auf den unteren Leiter übertragen wird, besteht die Gefahr, daß entweder beide Leiter gegenüber der Kontaktfläche des Kommutators schwingen oder nur der obere Leiter in Schwingung versetzt wird. Das hat zur Folge, daß entweder die Schweißverbindung zwischen den zwei Leitern oder die zum Kontaktbereich des Kommutators nur schwach augebildet wird, so daß bei späteren Schwingungsbelastungen im Betrieb der elektrischen Maschine die schwache Schweißstelle wieder aufbrechen kann. Verbesserte Schweißverbindungen wären allenfalls durch zeitlich mit Abstand hintereinander durchgeführte Ultraschallschweißungen zwischen den Leitern einerseits und der Kontaktfläche andererseits möglich. Dies erfordert aber einen erheblichen zusätzlichen Zeitaufwand. Außerdem muß bei der bekannten Ausführung der Ultraschallschweißung für jede Kommutatorlamelle der Ultraschallschweißvorgang wiederholt werden, was ebenfalls sehr zeitaufwendig ist.

### Vorteile der Erfindung

Das erfindungsgemäße Ultraschall-Schweißverfahren und die dazu verwendete Schweißvorrichtung mit den im Anspruch 1 beziehungsweise 3 genannten Merkmalen bietet dem Stand der Technik gegenüber den Vorteil, daß alle Drahtenden gleichzeitig an den ihnen zugeordneten Kontaktbereichen befestigbar sind, so daß beispielsweise bei Kommutatoren sämtliche Lamellen des Kommutators vorzugsweise gleichzeitig kontaktiert werden können. Dadurch, daß die zu befestigenden Drahtenden mittels einer eine Andruckkraft ausübenden Einrichtung gegen die Kontaktbereiche gedrückt werden und die Sonotrode gleichzeitig die untenliegenden Drahtenden quer zur Andrückrichtung in Schwingung versetzt, kann zwischen den Drahtenden und den Kontaktbereichen eine ausgezeichnet festhaftende Schweißverbindung hergestellt werden. Sämtliche Schweißverbindungen werden vorzugsweise in einem Arbeitsgang hergestellt, indem alle Drahtenden gleichzeitig gegen die ihnen jeweils zugeordneten Kontaktbereiche gedrückt werden und indem die Sonotrode gleichzeitig alle unteren Drahtenden in Schwingung versetzt. Durch die Schwingungen der unteren Drahtenden kommt es in bekannter Weise an den Berührungspunkten zwischen den übereinanderliegenden Drahtenden und dem unteren Drahtende und dem Kontaktbereich zum Austausch von Gitterstrukturen, so daß es zu einer festen Schweißverbindung kommt. Durch die in der Regel im wesentlichen runde Ausbildung der Drahtenden, ist die Größe der Berührungspunkte relativ klein, so daß lediglich ein relativ kleiner Energieeintrag über die Sonotrode notwendig ist. Diese braucht somit beispielsweise nur für einen relativ kleinen Amplitudenbereich von mechanischen Ultraschallschwingungen ausgelegt sein, die auf die untenliegenden Drahtenden übertragen werden.

In vorteilhafter Ausgestaltung der Erfindung ist vorgesehen, daß die Sonotrode als Torsionssonotrode ausgebildet ist, die vorteilhafterweise wenigstens eine der Anzahl gleichzeitig zu befestigender Drahtenden entsprechende Anzahl von Aufnahmebereichen besitzt. Mit ihren Aufnahmebereichen kann die Sonotrode die untenliegenden Drahtenden formschlüssig angreifen, so daß mittels Torsionsschwingungen der Sonotrode die untenliegenden Drahtenden gleichmäßig in Schwingungen versetzt werden können. Durch den Aufbau der Sonotrode als Torsionssonotrode wird insgesamt auch nur ein relativ kleiner Freiraum für die Torsionssonotrode benötigt, die ein gleichzeitiges Angreifen aller unteren Drahtenden ermöglicht. Durch den Aufbau der Torsionssonotrode kann der Ultraschall-Schweißprozeß in einfacher weise in eine Fertigung, beispielsweise in eine Montagetaktstraße zur Fertigung von Kommutatoren für elektrische Maschinen eingebunden werden. Infolge der gleichzeitigen Befestigung aller Drahtenden wird nur eine relativ geringe Montagezeit für die Befestigung der Drahtenden benötigt, so daß insgesamt eine kurze Taktzeit eingehalten werden kann.

Ferner ist von Vorteil, wenn die Einrichtung zum Einleiten einer Andruckkraft die äußeren Drahtenden führende beziehungsweise umgreifende , radial verlagerbare Spannglieder aufweist, die vorzugsweise pneumatisch oder hydraulisch betätigbar sind. Das Heranfahren der Sonotrode an die unteren Drahtenden kann somit mit der Einrichtung zum Aufbringen der Andruckkraft gekoppelt werden, so daß insgesamt eine sehr kompakte, wenig Freiraum benötigende Ultraschall-Schweißvorrichtung geschaffen ist. Durch die radial verlagerbaren Spannglieder, die vorzugsweise durch Spannbacken einer Spannhülse gebildet sind, kann ein im wesentlichen gleichmäßiger Krafteintrag auf alle zu befestigenden Drahtenden realisiert werden. Durch die Spannglieder erfolgt gleichzeitig eine Selbstjustierung der gesamten Ultraschall-Schweißvorrichtung, so daß gewährleistet ist, daß die Sonotrode mit ihren Aufnahmebereichen die unteren Drahtenden exakt erfassen kann. Die Aufnahmebereiche können hierzu vorzugsweise als eine Einlaufphase aufweisende Ausnehmungen der Sonotrode ausgebildet sein, so daß hier ebenfalls eine selbstjustierte Positionierung der Sonotrode möglich ist.

Weitere vorteilhafte Ausgestaltungen der Erfindung ergeben sich aus den übrigen in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: schematisch eine Teilansicht eines Kommutators;
- Figur 2: schematisch einen Längsschnitt durch eine Sonotrode;
- Figur 3: schematisch eine Draufsicht auf eine Sonotrode und
- Figur 4: eine Teilansicht einer Abwicklung einer Sonotrode.

### Beschreibung des Ausführungsbeispiels

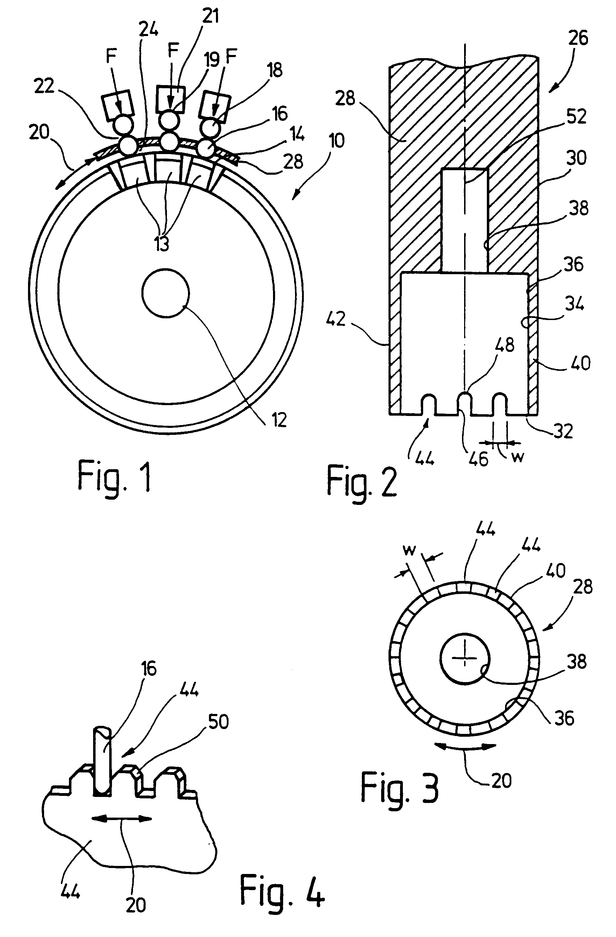

Figur 1 zeigt schematisch einen allgemein mit 10 bezeichneten Kommutator in einer Teilansicht. Der Kommutator 10 ist auf einer Ankerwelle 12 einer nicht dargestellten elektrischen Maschine, beispielsweise einem Starter-Antriebsmotor für Kraftfahrzeuge, angeordnet. Der Kommutator 10 besitzt gegeneinander isoliert angeordnete Lamellen 13, denen jeweils ein Kontaktbereich 14 zugeordnet ist. Entsprechend der Anzahl der Lamellen sind eine ensprechende Anzahl von Kontaktbereichen 14 über den Umfang des Kommutators 10 verteilt, wobei hier lediglich ausschnittsweise drei Lamellen 13 mit ihren Anschluß- bzw. Kontaktbereichen 14 zur Verdeutlichung dargestellt sind. Auf dem Kontaktbereich 14 ist eine untere Reihe von Drahtenden 16 angeordnet, über denen eine obere Reihe von Drahtenden 18 liegt. Die Drahtenden 16 und 18 führen zu eine Ankerwicklung ergebende Spulen innerhalb des Ankers, die entsprechend dem Einsatz der elektrischen Maschine wählbar fest verschaltet sind. Zum Befestigen der übereinanderliegenden Drahtenden 16 und 18 untereinander und mit den Kontaktbereichen 14, das heißt, zum Herstellen einer elektrisch leitenden Verbindung, wird erfindungsgemäß ein Ultraschall-Schweißverfahren eingesetzt. Hierzu werden die äußeren Drahtenden 18 in axialen Führungen 19 von Spannelementen 21 aufgenommen und von diesen mit einer Andruckkraft F beaufschlagt, während die unteren Drahtenden 16 gleichzeitig mit einer noch näher zu erläuternden ringförmigen Torsionssonotrode 28 in Schwingungen versetzt werden. Die unteren Drahtenden 16 schwingen dabei in der hier mit dem Doppelpfeil 20 angegebenen Richtung. Die Schwingungsebene der unteren Drahtenden 16 liegt somit entsprechend der Schwingungsrichtung 20 quer zu der Andruckkraft F. Durch die Schwingung der unteren Drahtenden 16 kommt es an den Berührungspunkten 22 zwischen den unteren und oberen Drahtenden 16 und 18 und den Berührungspunkten 24 zwischen den unteren Drahtenden 16 und den Kontaktbereichen 14 zu einer Ultraschall-Verschweißung. Dadurch, daß die Berührungspunkte 22 und 24 (eigentlich Berührungsflächen) relativ kleinflächig sind, kann trotz eines relativ geringen Energieeintrages über die Sonotrode eine festhaftende Kaltverschweißung zwischen den Drahtenden 16 und 18 beziehungsweise zwischen den Drahtenden 16 und den Kontaktbereiche 14 erfolgen. Die Sonotrode besitzt hierbei beispielsweise eine Torsionsamplitude von ca. 50 µm, also einem Gesamttorsionsweg von ca. 100 µm, der im Ultraschall-Frequenzbereich mechanisch auf die Drahtenden 16 übertragen wird.

Figur 2 zeigt einen Schwingkopf 26 einer Sonotrode 28. Die Sonotrode 28 besitzt einen zylindrischen Grundkörper 30, in den von einer Stirnseite 32 eine Stufenbohrung 34 eingebracht ist. Die Stufenbohrung 34 besitzt einen durchmessergrößeren Bereich 36, der in einen innenliegenden, durchmesserkleineren Bereich 38 übergeht. Der Durchmesser des Bereiches 36 entspricht dabei in etwa dem Durchmesser des Anschlußbereiches des Kommutators 10. Der Durchmesser des Bereiches 38 ist so gewählt, daß dieser größer ist als ein Durchmesser der Ankerwelle 12. Der Grundkörper 30 besitzt somit eine hülsenförmige Verlängerung 40, die von einer den Bereich 36 umgebenden Wandung 42 gebildet wird. Die Verlängerung 40 weist an der Stirnseite 32 Aufnahmebereiche 44 auf, die über den Umfang der Verlängerung 40 verteilt sind. Die Teilung, mit der die Aufnahmebereiche 44 über den Umfang der Verlängerung 40 verteilt sind, entspricht der Anordnung der unteren Drahtenden 16 über den Umfang des Kommutators 10. Die Aufnahmebereiche 44 werden von randoffenen Durchbrüchen durch die Verlängerung 40 gebildet. Ein Grund 48 der Durchbrüche 46 ist beispielsweise halbkreisförmig ausgebildet. Die Durchbrüche 46 weisen eine Weite w auf, die dem Durchmesser der unteren Drahtenden 16 entspricht.

In der in Figur 3 gezeigten Draufsicht auf die Sonotrode 28, von der den unteren Drahtenden 16 zugewandten Seite her gesehen, wird deutlich, daß über den Umfang der Verlängerung 40 die Aufnahmebereiche 44 entsprechend beabstandet zueinander angeordnet sind. Der Bereich 38 der Stufenbohrung 34, in den man in der Figur 3 quasi von oben reinschaut, ist so ausgebildet, daß bei einer an den Kommutator 10 herangeführten Sonotrode 28 ein dort überstehender Stumpf der Ankerwelle 12 hineinragen kann, ohne daß es zu einer Berührung zwischen der Sonotrode 28 und der Ankerwelle 12 kommt. Die Sonotrode 28 wird über eine geeignete Einrichtung an den Kommutator 10 herangeführt, so daß die unteren Drahtenden 16 mit ihren der Sonotrode 28 zugewandten Stirnseiten in die Aufnahmebereiche 44 eingreifen.

Anhand der Figur 4 ist beispielhaft ein Ausschnitt einer Abwicklung der Verlängerung 40 mit einem in einem Aufnahmebereich 44 eingeführten unteren Drahtende 16 gezeigt. Zum besseren Einführen der unteren Drahtenden 16 können die Ausnehmungen 46 Fasen 50 besitzen, die somit eine Selbstzentrierung der Sonotrode 28 zu den unteren Drahtenden 16 begünstigt.

Über einen nicht dargestellten Schwingantrieb wird die Sonotrode 28 zu ihrer Längsachse 52 (Figur 2) in mechanische Torsionsschwingungen im Ultraschall-Frequenzbereich versetzt, die auf die unteren Drahtenden 16 übertragen werden. Da der Durchmesser der unteren Drahtenden 16 der Weite w der Durchbrüche 46 entspricht, liegen die unteren Drahtenden 16 formschlüssig an der Verlängerung 40 an, so daß eine im wesentlichen verlustfreie Übertragung der Ultraschall-Schwingungen möglich ist. Durch die Schwingungen der unteren Drahtenden 16 unterliegen diese einer Relativbewegung in bezug auf die oberen Drahtenden 18 und die Kontaktbereiche 14. Hierdurch kommt es unter gleichzeitigem Anliegen der Andruckkraft F zu einer Kaltverschweißung einerseits in den Berührungspunkten 22 zwischen den unteren Drahtenden 16 und den oberen Drahtenden 18 und andererseits an den Berührungspunkten 24 zwischen den unteren Drahtenden 16 und den Kontaktbereichen 14. Die Andruckkraft F wird von den Spannelementen 21 aufgebracht. Diese können Bestandteil einer nicht dargestellten Vorrichtung sein, die hierzu vorzugsweise eine Hülsenform oder eine entsprechend gestaltete Ausnehmung besitzt, die ein gleichzeitiges Umgreifen aller äußeren Drahtenden 18 gestattet. Durch Betätigen von in radialer Richtung, entsprechend der Wirkungsrichtung der Andruckkraft F verlagerbaren Spannelementen 21, kann auf die äußeren Drahtenden eine gleichmäßige Andruckkraft F ausgeübt werden.

Die Erfindung beschränkt sich selbstverständlich nicht auf das dargestellte Ausführungsbeispiel. So sind auch andere Vorrichtungen denkbar, die gleichzeitig sämtliche unteren Drahtenden 16 in eine Relativbewegung zu den oberen Drahtenden 18 und den Kontaktbereichen 14 versetzen, so daß eine gleichzeitige Kaltverschweißung aller Befestigungspunkte des Kommutators 10 erfolgt. Durch die gleichzeitige Verschweißung aller Berührungspunkte ist eine sehr zeitsparende und damit kostengünstige Kontaktierung der Drahtenden 16 beziehungsweise 18 möglich, die ohne weiteres in einen automatisch ablaufenden Herstell- und Montageprozeß einbindbar ist.

Das in dem Ausführungsbeispiel dargestellte Prinzip ist Selbstverständlich auf die Kontaktierung von mehreren übereinander angeordneten Drahtenden oder Drahtbereichen übertragbar, indem bei entsprechender Lagefixierung der Drahtenden, beispielsweise durch Angreifen einer Andruckkraft F, die jeweils benachbarten Drahtenden in eine Relativbewegung zueinander versetzt werden, so daß zwischen den Berührungspunkten der Drahtenden eine Schweißverbindung erfolgt. Im übrigen kann bei der Kontaktierung von nebeneinander angeordneten, übereinanderliegenden Drahtenden die Sonotrode beispielsweise eine Kammstruktur besitzen, die entsprechende Ausnehmungen zur Aufnahme der Drahtenden besitzt. Die Sonotrode wird dann in Linearschwingungen versetzt, die - in erwähnter Weise - zu den Schweißverbindungen führen. Dies ist beispielsweise auch zur Kontaktierung von einzelnen oder mehreren nebeneinander liegenden Steckverbindungen, Schaltkontakten, Elektroden oder dergleichen vorteilhaft, wenn an deren Kontaktbereichen mehrere Anschlußdrähte anzubringen sind.

## Patentansprüche

1. Ultraschall-Schweißverfahren zum Befestigen von wenigstens zwei übereinanderliegenden Drahtenden (16, 18) an Kontaktbereichen elektrischer Teile, insbesondere an Kontaktbereichen (14) von Lamellen (13) von Kommutatoren (10) für rotierende elektrische Maschinen, mit einer quer zur Achsrichtung der Drahtenden schwingenden Sonotrode (28) und einer Einrichtung (21) zum Einleiten einer Andruckkraft (F) auf die Drahtenden, dadurch gekennzeichnet, daß die Einrichtung (21) zum Einleiten der Andruckkraft auf die Drahtenden (16, 18) ruht, daß alle an mindestens einem Kontaktbereich (14) zu befestigenden Drahtenden (16,,18) mittels der Andruckkraft (F) dieser Einrichtung (21) gleichzeitig gegen den mindestens einen Kontaktbereich (14) gedrückt werden und daß das untere, auf den Kontaktbereich aufliegende Drahtende (16) gleichzeitig durch die Sonotrode (28) quer zur Andruckkraft (F) in Schwingung versetzt wird, so daß dieses Drahtende (16) gegenüber dem Kontaktbereich (14) und dem oberen Drahtende (18) eine Relativbewegung ausführt, wobei das obere Drahtende (18) durch eine axiale Führung (19) der ruhenden Einrichtung (21) aufgenommen ist.

2. Ultraschall-Schweißverfahren nach Anspruch 1, dadurch gekennzeichnet, daß die zu befestigenden Drahtenden (16, 18) aller Kontaktbereiche (14) gleichzeitig gegen ihre Kontaktbereiche (14) gedrückt undd alle unteren Drahtenden (16) gleichzeitig durch die Sonotrode (28) quer zur Andruckkraft (F) in Schwingung versetzt werden.

3. Ultraschall-Schweißvorrichtung zur Durchführung eines Verfahrens nach Anspruch 1 oder 2, wobei wenigstens zwei übereinanderliegenden Drahtenden (16, 18) an Kontaktbereichen elektrischer Teile mit einer quer zur Achsrichtung der Drahtenden schwingenden Sonotrode (28) und einer Einrichtung (21) zum Einleiten einer Andruckkraft (F) auf die Dahtenden verschweißt werden, dadurch gekennzeichnet, daß die Einrichtung zum Einleiten der Andruckkraft (F) Spannglieder (21) mit Führungen (19) für die äußeren Drahtenden (18) und daß die Sonotrode (28) Aufnahmebereiche (44) zur Aufnahme der Drahtenden (16) aufweist, die wenigstens der Anzahl der gleichzeitig zu befestigenden unteren Drahtenden (16) entspricht.

4. Ultraschall-Schweißvorrichtung nach Anspruch 3, dadurch gekennzeichnet, daß die Sonotrode (29) eine vorzugsweise hülsenförmige Verlängerung (40) aufweist, an deren Stirnseite (32) die Aufnahmebereiche (44) in Form von randoffenen Durchbrüchen (46) der verlängerung (40) gebildet sind, die in Richtung der Stirnseite (32) eine Fase (50) aufweisen.

5. Ultraschall-Schweißvorrichtung nach einem der Ansprüche 3 oder 4, dadurch gekennzeichnet, daß jeweils ein Grund (48) der Durchbrüche (46) einen Anschlag für die Stirnflächen der Drahtenden (16) bildet.

6. Ultraschall-Schweißvorrichtung nach einem der Ansprüche 3 bis 5, dadurch gekennzeichnet, daß die Einrichtung zum Einleiten der Andruckkraft (F) die äußeren Drahtenden (18) führende, radial verschiebbare Spannelemente (21) aufweist.

7. Ultraschall-Schweißvorrichtung nach einem der Ansprüche 3 bis 6, dadurch gekennzeichnet, daß die Sonotrode (28) eine Torsionssonotrode ist.

## Claims

1. Ultrasonic welding method for fastening at least two superimposed wire ends (16, 18) on contact regions of electric parts, in particular on contact regions (14) of segments (13) of commutators (10) for rotating electric machines, by means of a sonotrode (28) vibrating transverse to the axial direction of the wire ends and of a device (21) for applying a pressure force (F) to the wire ends, characterized in that the device (21) for applying the pressure force to the wire ends (16, 18) is stationary, in that all the wire ends (16, 18) which are to be fastened on at least one contact region (14) are simultaneously pressed by means of the pressure force (F) of this device (21) against the at least one contact region (14), and in that the lower wire end (16) resting on the contact region is simultaneously set vibrating by the sonotrode (28) transverse to the pressure force (F), with the result that this wire end (16) executes a relative movement with respect to the contact region (14) and the upper wire end (18), the upper wire end (18) being held by an axial guide (19) of the stationary device (21).

2. Ultrasonic welding method according to Claim 1, characterized in that the wire ends (16, 18), which are to be fastened, of all the contact regions (14) are simultaneously pressed against their contact regions (14), and all the lower wire ends (16) are simultaneously set vibrating by the sonotrode (28) transverse to the pressure force (F).

3. Ultrasonic welding device for carrying out a method according to Claim 1 or 2, it being the case that at least two superimposed wire ends (16, 18) are welded on contact regions of electric parts by means of a sonotrode (28) vibrating transverse to the axial direction of the wire ends and of a device (21) for applying a pressure force (F) to the wire ends, characterized in that the device for applying the pressure force (F) has clamping elements (21) with guides (19) for the outer wire ends (18), and in that the sonotrode (28) has holding regions (44) for holding the wire ends (16), which correspond at least to the number of the lower wire ends (16) to be fastened simultaneously.

4. Ultrasonic welding device according to Claim 3, characterized in that the sonotrode (28) has a preferably sleeve-shaped extension (40) on whose end face (32) the holding regions (44) are formed in the guise of cutouts (46) in the extension (40) which have open edges and have a bevel (50) in the direction of the end face (32).

5. Ultrasonic welding device according to one of Claims 3 or 4, characterized in that in each case a base (48) of the cutouts (46) forms a stop for the end faces of the wire ends (16).

6. Ultrasonic welding device according to one of Claims 3 to 5, characterized in that the device for applying the pressure force (F) has radially displaceable clamping elements (21) which guide the outer wire ends (18).

7. Ultrasonic welding device according to one of Claims 3 to 6, characterized in that the sonotrode (28) is a torsion sonotrode.

## Revendications

1. Procédé de soudage aux ultrasons pour fixer au moins deux extrémités de fils (16, 18) superposées sur des pièces électriques dans une zone de contact, notamment des zones de contact (14) de lamelles (13) de commutateurs (10) de machines électriques rotatives, comprenant
- une sonotrode (28) oscillant transversalement à la direction axiale des extrémités de fils et
- une installation (21) pour induire une pression d'application (F) aux extrémités de fils,
caractérisé en ce que.
- l'installation (21) pour induire la pression d'application repose sur les extrémités de fils (16, 18),
- toutes les extrémités de fils (16, 18) à fixer sur au moins une zone de contact (14) étant pressées simultanément contre au moins une zone de contact (14) par la force de pression (F) de cette installation (21), et
- l'extrémité de fil (16), inférieure, appliquée sur la zone de contact, est en même temps mise en oscillations transversalement à la force d'application (F) par la sonotrode (28) pour que cette extrémité de fil (16) effectue un mouvement rotatif par rapport à la zone de contact (14) et l'extrémité supérieure de fil (18),
- l'extrémité supérieure de fil (18) étant reçue par un guide axial (19) de l'installation fixe (21).

2. Procédé de soudage aux ultrasons selon la revendication 1,
caractérisé en ce que
les extrémités de fils (16, 18) à fixer de toutes les zones de contact (14) sont pressées simultanément contre leurs zones de contact (14) et toutes les extrémités de fil inférieur (16) sont mises en oscillations, simultanément par la sonotrode (28), transversalement à la direction de la force d'application (F).

3. Installation de soudage aux ultrasons pour la mise en oeuvre d'un procédé selon l'une quelconque des revendications 1 ou 2 avec
- au moins deux extrémités de fils (16, 18) superposées dans les zones de contact de pièces électriques, avec une sonotrode (28) oscillant dans une direction transversale à la direction axiale des extrémités de fils et une installation (21) pour induire une pression d'application (F) sur les extrémités de fils à souder,
caractérisée en ce que
- l'installation pour induire la pression d'application (F) comporte des organes de serrage (21) avec des organes de guidage (19) pour les extrémités de fil extérieur (18) et
- la sonotrode (28) comporte des zones de réception (44) pour recevoir les extrémités de fil (16) ces zones correspondant au moins au nombre d'extrémités de fil (16), inférieur, qu'il faut fixer simultanément.

4. Installation de soudage aux ultrasons selon la revendication 3,
caractérisée en ce que
la sonotrode (29) comporte un prolongement (40) au moins en forme de manchon dont la face frontale (32) comporte des zones de réception (44) en forme de passages traversants (46) à bord ouvert dans le prolongement (40), et ayant un congé (50) dans la direction de la face frontale (32).

5. Installation de soudage aux ultrasons selon l'une quelconque des revendications 3 ou 4,
caractérisée en ce que
chaque fond (48) des passages (46) forme une butée pour les surfaces frontales des extrémités de fil (16).

6. Installation de soudage aux ultrasons selon l'une des revendications 3 à 5,
caractérisée en ce que
l'installation pour induire la force d'application (F) porte les extrémités de fil extérieur (18), de guidage, avec des éléments de serrage (21) assurant un serrage radial.

7. Installation de soudage aux ultrasons selon l'une des revendications 3 à 6,
caractérisée en ce que
la sonotrode (28) est une sonotrode à torsion.
